# EUROPEAN PATENT SPECIFICATION

(11) **EP 2 306 676 B1**
(45) Date of publication and mention of the grant of the patent: **06.08.2014**
(21) Application number: 09305926.9
(22) Date of filing: 30.09.2009
(51) Int. Cl.: H04L 12/725, H04L 12/911, H04L 12/927, H04L 12/54

(54) **Access to an IP network from a mobile network**
Zugriff auf ein IP-Netz von einem Mobilfunknetz
Accès à un réseau IP à partir d'un réseau mobile

(43) Date of publication of application: 06.04.2011
(73) Proprietor: Mitsubishi Electric R&D Centre Europe B.V., 1119 NS Schiphol Rijk Amsterdam (NL); Mitsubishi Electric Corporation, Chiyoda-ku Tokyo 100-8310 (JP)
(72) Inventor: Rollet, Romain, 35590 L'hermitage (FR); Mentre, David, 35708 Rennes Cédex 7 (FR)
(74) Representative: Cabinet Plasseraud

(56) References cited:
- GB-A- 2 457 029
- US-A1- 2009 232 019
- US-B1- 6 775 280
- CHINA MOBILE ET AL: "Single IP local breakout for H(e)NB" 3GPP DRAFT; S2-092881, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Hangzhou; 20090402, 2 April 2009 (2009-04-02), XP050346033 [retrieved on 2009-04-02]
- SAMSUNG: "Open issues and solution for LIPA service" 3GPP DRAFT; S2-094346-OPEN-ISSUES-LIPA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sophia; 20090630, 30 June 2009 (2009-06-30), XP050355875 [retrieved on 2009-06-30]

## Description

### BACKGROUND OF THE INVENTION

### 1. Technical Field

The present invention relates generally to a mobile network and, more particularly, to an access to an external network from this mobile network.

### 2. Related Art

LTE (for 'Long Term Evolution') architecture defines a mobile network architecture (3GPP for 'Third Generation Partnership Project', Release 9).

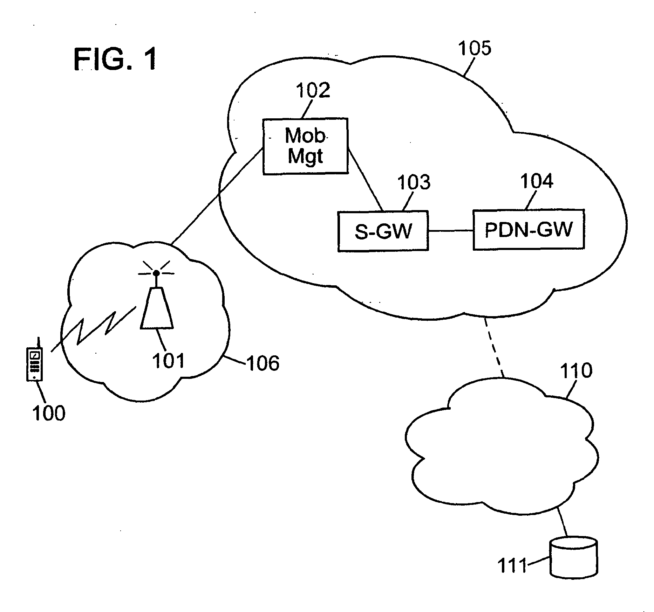

Figure 1 illustrates a network according to this type of architecture. In this network, a control plane and a data plane are handled separately. It comprises a core network part 105 and a home network part 106. The core network 105 includes a Mobility Management Entity 102 (MME), a Serving Gateway 103 (S-GW) and a Packet Data Network Gateway 104 (PDN-GW). The PDN-GW 104 can be linked to an internet network 110 which can comprise a server 111.

The home network 106 includes a home NodeB 101.

In such architecture, a mobile terminal 100 can use services offered in this mobile network and also offered in an internet network 110. Indeed, the mobile terminal 100 can access to the internet network 110 through the core network 105.

Some network solutions propose to offer to the mobile terminal an access to the internet network 110 directly from the home network 106, and more precisely from the home NodeB 101.

But, this type of solution is based on the fact that the home NodeB is able to handle a packets routing at the control plane level, as it is described for instance in the document TSG SA WG2 Meeting #72 TD S2 092355, Nortel, April 2009. For that purpose, some functional parts of the Mobility Management Entity 102 are introduced in the home NodeB 101. In this case, such a home

NodeB should become a complex network entity, with more intelligence proceedings, and then it can be expensive.

The document US 2009/232019 describe a method to facilitate access to one or more local services in a wireless network, including different mobility management functionalities at different nodes in a system whereby mobility management for a given node may be provided by a different node for different types of traffic.

In view of the foregoing, there is a need for enhancing a packet routing in such a network architecture.

### SUMMARY OF THE INVENTION

A first aspect of the present invention proposes a method for routing packets from a terminal of a mobile network to a device of an internet network according to the first independent claim.

In these conditions, a mobile terminal of a mobile network can access to an IP network via a home NodeB through a simple routing step carried out at the home NodeB level. This routing step is easy to be carried out because it is based on simple criteria. Indeed; as soon as the home NodeB is able to retrieve a QoS value associated to the bearer on which the IP packet is received, the home NodeB is able to determine the interface to route the received IP packet.

These steps allow to route IP packets on uplink.

No limitation is attached to the means used in order to make the home NodeB able to determine the interface to- route an IP packet received from a mobile terminal. It is possible, for instance, to handle a mapping table at the home NodeB, such a mapping table being able to associate one bearer to one interface. This mapping table can be updated statically or dynamically according to any rules. For instance, it could be advantageous to handle this table based on a comparison between real quality levels in case of routing through the LAN interface and in case of routing through the Core Network interface. Such quality levels could be determined by any kind of measurement, notably by sending messages like 'ping' messages.

Thanks to these conditions, the home NodeB can carry out a relevant routing of received IP packets from mobile terminals, easily, based on simple criteria: QoS value associated to the considered bearer.

In one embodiment, the home NodeB handles this routing without carrying out any control plane actions. Consequently, a home NodeB can be adapted easily to be able to perform a method for routing according to one embodiment of the present invention.

In order to make the home NodeB able to handle IP packets received on downlink, it can be advantageous to store relevant information during the treatment applied on IP packets received on uplink.

The IP packet indicates a first IP source address. This first IP source address could correspond to an IP address already allocated to the considered terminal mobile by the core network of the mobile network.

The following steps can be carried out, in case of routing the IP packet through the LAN interface:
/a/ allocating a second IP source address to the bearer;
/b/ storing in memory the first and the second IP source addresses and said bearer as an associated bearer.

This second IP source address allocated on uplink will be used on downlink as an IP destination address. Advantageously, the packets routing on downlink can be done based on the association between the second IP source address and the bearer.

Two different cases can occur. In a first case, the home NodeB is able to allocate one different second IP source address for each different bearer. Then, a correspondence one to one between a bearer and an IP address can be done and a routing on downlink can be done easily based on the IP destination address indicated in received IP packets on downlink. In a second case, the home NodeB allocates one second IP address to a plurality of bearers. In this condition, in addition to the second IP source address, the TCP/UDP source port is also translated for each new TCP connection or UDP flow in order to create an association between a bearer and the destination port as indicated in a received packet on downlink. In the following, a TCP/UDP port can be referred as 'IP port' or as 'port' only, without changing the meaning of the terms.

More precisely, when different second IP source addresses are respectively allocated to different bearers on a one-to-one basis, in the first case, the routing on downlink can be performed easily because this IP address allocation performed by the home NodeB allows to have a correspondence 'one to one' between the bearer used for the IP packet transmission and the second IP source address. The association of such correspondence is stored in memory. It is easy to handle IP packets received on downlink. Indeed, such an IP packet received on downlink indicates an IP destination address. This IP destination address is the second IP source address as allocated by the home NodeB, when this downlink corresponds to the considered uplink. Then, in this context, the home NodeB receives an IP packet indicating a destination IP address which is an IP address stored in memory. Then, it retrieves a bearer identifier associated with this address IP and routes the IP packet received on downlink to this bearer. Thus, the IP packet is transmitted to the mobile terminal correctly.

Thus, the method for routing can further comprise the following steps at the home NodeB:
/i/ receiving from the LAN interface an IP packet indicating an IP destination port and an IP destination address;
/ii/ considering said IP destination address as a second IP source address and retrieving the associated bearer stored in memory;
/iii/ replacing said IP destination address by the first IP source address associated to the bearer; and
/iv/ routing the packet through the associated bearer.

In the second case, the IP packet indicating an original source port, at step /a/, the following steps are performed:
- allocating a same second IP address to a plurality of different bearers;
- allocating different alternate source ports respectively to different bearers ;
- storing an association of the first and the second IP source addresses, the original source port, the alternate source port, the destination IP address, the destination port and the bearer as an associated bearer.

In this second case, a correspondence 'one to one' can be done between the destination port and a bearer for routing IP packets received on downlink, based on information stored in memory during the packets treatment on uplink.

Thus, the method for routing packets can further comprise the following steps at the home NodeB:
/i/ receiving from the LAN interface an IP packet indicating an IP destination port and an IP destination address;
/ii/ considering said IP destination port as an alternate source port and retrieving the associated bearer stored in memory;
/iii/ replacing said IP destination port with the original source port, and said IP destination address by the first IP source address associated to the bearer; and
/iv/ routing the packet through the associated bearer.

In one embodiment, the QoS value can correspond to a Quality Class Indicator.

The home NodeB sets a tag VLAN based on the QoS associated to the bearer. It is possible in these conditions to make the home NodeB able to determine a priority level of IP packets treatment.

A QoS value can be associated either to the core network interface or to the LAN interface based on a type of resource to be transmitted on said bearer. Thus, QoS values can be attached to bearers depending on the time constraints and quality requirements for some applications using some bearers.

A QoS value can be associated, dynamically or statically, either to the core network interface or to the LAN interface based on a comparison of quality levels for a packets transmission through a core network interface and for a packets transmission through a LAN interface.

Association between a QoS value and the selected output interface (meaning either core network interface or LAN interface) can be defined by an internal mapping table that can be statically filled by an administrator. It can be also modified dynamically according to a comparison of quality levels for a packets transmission through both output interfaces.

For instance, a QoS measurement can be performed between the home NodeB and a server reachable either via the core network interface or via the LAN interface. Some typical metrics can be monitored periodically:
- available bandwidth on top of a TCP connection (downlink only/uplink only/downlink and uplink simultaneously)
- RTT measurement
- Jitter measurement/packet losses for typical CBR connections (64kbs/384kbs/etc...)

QoS measurement results can be stored by the home NodeB, in order to make the home NodeB able to calculate probabilities for evaluating QoS.

Moreover, a tag like a VLAN tag as defined by IEEE 802.1Q standard can be applied advantageously. Indeed, the home NodeB can set a tag VLAN based on the QoS associated to the bearer, in order to determine the priority of treatment for IP packets which go through it. VLAN tag is then set according to a third field configured in the previously introduced mapping table.

A second aspect of the present invention proposes a home NodeB according to claim 8.

### BRIEF DESCRIPTION OF THE DRAWINGS

Further features and advantages of the present invention will become more apparent from the description below. This is given purely by way of illustration and should be read in conjunction with the appended drawings, of which:
Figure 1 illustrates an architecture of a mobile network according to a prior art, as already described.
Figure 2 illustrates the main steps performed by a method of packet routing according to one embodiment of the present invention.
Figure 3 illustrates architecture of a mobile network in detail, wherein one embodiment of the present invention can be applied.
Figure 4 illustrates a home network comprising a plurality of home NodeBs.
Figure 5 illustrates different bearers used according to one embodiment of the present invention.
Figure 6 illustrates network architecture according to one embodiment of the present invention.
Figure 7 illustrates a routing module according to one embodiment of the present invention.

### DESCRIPTION OF PREFERRED EMBODIMENTS

The present invention is described herein below in one exemplary application to a LTE architecture of network. But, it is easy to apply the same principles to other types of network.

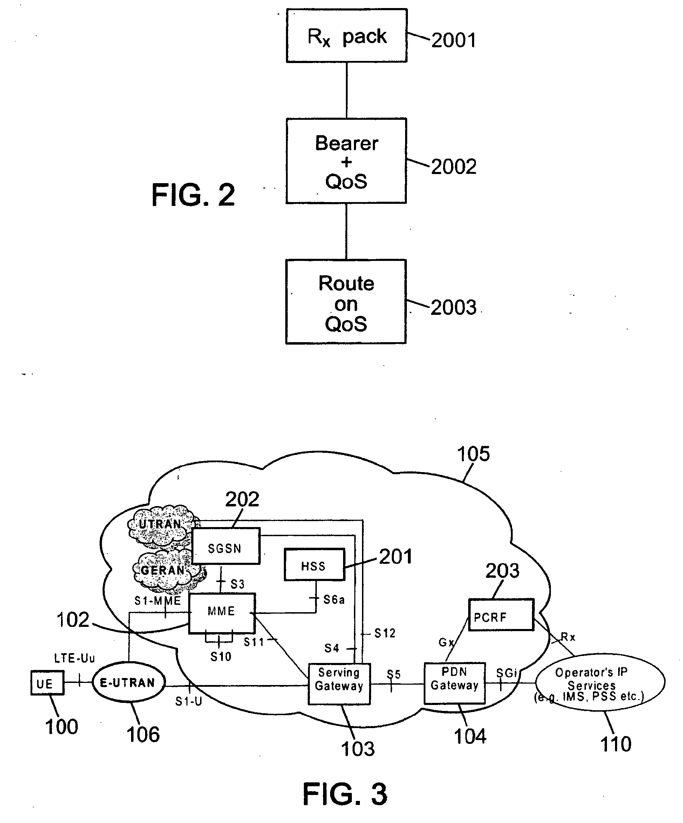

Figure 2 illustrates the main steps performed by a method of packet routing according to one embodiment of the present invention.

These steps are adapted for routing packets from a terminal 100 of a mobile network to a device of an internet network. This internet network can be a LAN ('Local Network Area'). The mobile network has a core network 105 and a home network 106 including a home NodeB 101.

The internet network is linked to the home network either through a core network interface or through a LAN interface. Thus, the home NodeB is able to choose one of these interfaces in order to route any IP packets received from the terminal. In this mobile network, packets are transmitted in the mobile network through respective bearers, a QoS value being associated to each bearer.

In a step 2001, the home NodeB receives from the terminal at least one IP packet on a given bearer. In a step 2002, the home NodeB determines the QoS value associated to this given bearer. Then, in a step 2003, it decides to route the received packet through the core network interface or through the LAN interface, based on the associated QoS value.

When these steps are applied in a network according to LTE architecture, a QoS value is already associated to each bearer, which is a QCI value for 'Quality Class Identifier' in this case. Consequently, it is easy to carry out such a routing method. Advantageously, there is no need to perform any actions at the control plane level in order to route these packets. The home NodeB according to one embodiment of the present invention can be designed easily. Then its cost can be equivalent as before.

Carrying out these steps allows choosing which interface will be used to route the packet received on an uplink.

Such a packet received on uplink, on a given radio bearer, which is identified by an identifier RB_ID, indicates an original IP source address IP_{RB_ID}, _{CN}, a source port, an IP destination address and a destination port. In one embodiment, the original IP source address corresponds to an IP address allocated at the Core Network level to the terminal which transmits this packet. The following sections are related to the packet routing through the LAN interface. Indeed, in the case of a packet routing through the Core Network interface, there are not particular needs.

When the LAN interface is chosen to perform the transmission of the received packet, the home NodeB is in charge of allocating another IP address, referred as a second IP source address IP_{RB_ID,LAN,} in order to associate it to the bearer used for the transmission.

At this step, the first and the second IP source addresses are stored in memory with the associated bearer. In these conditions, the home NodeB will be able to route packets received on downlink. Indeed, upon reception of a packet on downlink, the home NodeB checks the destination IP address indicated in the received packet. Then, if this destination IP address corresponds to a second IP source address IP_{RB_ID,LAN} stored in memory, the home NodeB can retrieve the associated bearer, modify the destination IP address to IP_{RB_ID, CN} and then it can route the received packet through this bearer to transmit this packet to the destination terminal of the mobile network.

In some conditions, it could be advantageous to allocate a same second IP source address to a plurality of bearers, notably if the home NodeB handles a pool of available IP addresses which does not contain enough addresses for all bearers. In this case, when the home NodeB decides to route through the LAN interface the received packet on uplink, it is in charge to allocate an alternate source port in order to handle different alternate source ports respectively for different bearers.

For that purpose, the home NodeB can manage a pool of available ports to be allocated as alternate source ports, each dedicated source port being associated to onebearer.

In this embodiment, the following associated information are stored in memory:
- the original IP source address, meaning the first IP source address;
- the original source port;
- the alternate source port,
- the IP destination address,
- the Destination port, and
- the second IP source address
- Radio Bearer Identifier

Based on this information, the home NodeB is able to route packets received on downlink to the correct bearer on which the communication has been initiated. Indeed, upon reception of a packet on downlink, the home NodeB checks the destination port which should correspond to an alternate source port as stored in memory and the destination IP address which should correspond to a second IP source address as stored in memory. Thanks to the second IP source address and the alternate source port, the home NodeB is able to determine the associated bearer. Then, it can modify destination IP address and ports, and transmit the received packet through this bearer.

In one embodiment, it is possible to plan to handle the following table at the home NodeB level:

| Field name | Description | |
|---|---|---|
| IP_{RB_ID,CN} | First IP Source address | From uplink packet (TCP SYN) |
| IP_{Dest} | Destination IP address | From uplink packet (TCP SYN) |
| Port_{Org,Source} | Original source port | From uplink packet (TCP SYN) |
| Port_{Dest} | Destination port | From uplink packet (TCP SYN) |
| RB-ID | Radio bearer ID | From UTRAN |
| IP_{RB_ID,LAN} | Second IP Source address | Allocated by home NodeB |
| Port_{alt,Source} | alternate source port | Allocated by home NodeB |

Figure 3 illustrates architecture of a mobile network in detail, wherein one embodiment of the present invention can be applied.

A mobile terminal, or UE for 'User Equipment', can access to the core network 105 via a home network 106. The home network 106 corresponds to E-UTRAN, for 'Evolved Universal Terrestrial Radio Access Network', which is an access part of the network.

This type of architecture is based on a data plane for handling data exchange and on a control plane for handling signalling exchange.

The core network 105 comprises the Mobility Management Entity MME 102, which is a control node in charge of handling mobility and security for mobile terminals (UEs). MME 102 is a contact point for the control plane of the UE. When the UE 100 is moving in the access network, another MME can be involved.

The core network comprises also the Serving Gateway (S-GW) 103, which is the contact point for the data plane of the UE. The Serving Gateway can stay the same even if the UE is moving in the access network.

The core network 105 comprises the PDN Gateway 104, which is a contact point between the mobile network, LTE network, and the Internet network 110. Generally, the PDN GW 104 is in charge of handling IP addresses and managing Quality of Service (QoS).

The core network can further comprise a Home Subscriber Server 201 (HSS), which is a central node that mainly contains subscription and parameters information for UEs, and a Serving GPRS Support Node (SGSN) 202, which is in charge of handling data exchange with 3G (for 'third generation') and GSM (for 'Global System for Mobile Communications') networks. This core network can comprise too a Policy and Charging Rules Function 203 (PCRF) in charge of charging sessions handled in this network.

According to LTE standard, the interface:
- between the access network (or home network) 106 and the MME 102 is referred as S1-MME interface;
- between the MME 102 and the SGSN 202 is referred as S3;
- between the MME 102 and the Serving GW 103 is referred as S11;
- between the MME 102 and the HSS 201 is referred as S6a;
- between the SGW 103 and the PDN GW 104 is referred as S5;
- between the PDN GW 104 and the Internet network 110 is referred as SGi:
- between the PDN GW 104 and the PCRF 203 is referred as Gx;
- between the PCRF 203 and the internet network 110 is referred as Rx.

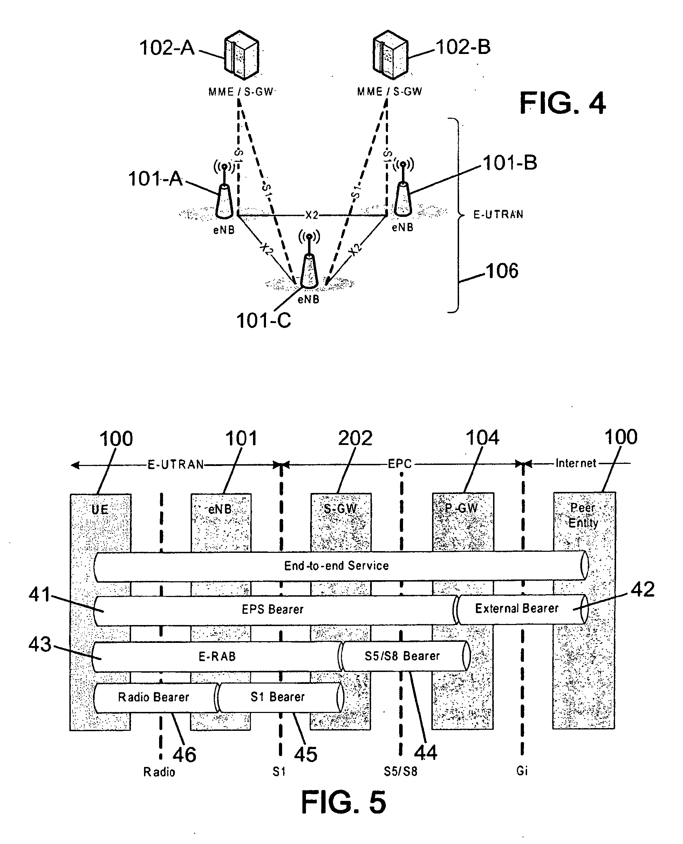

The home network part can contain several home NodeBs. Figure 4 illustrates an E-UTRAN network 106 comprising three home NodeBs 101-A, 101-B and 101-C. The home NodeB 101-A and 101-B are linked to an MME 102-A, and the home NodeB 101-B and 101-C are linked to an MME 102-B.

It shall be noted that, generally, Home NodeBs do not implement links of type X2, unlike NodeBs. A plurality of bearers is defined in order to support transmission through the network.

Figure 5 illustrates different bearers which can be used according to one embodiment of the present invention. An end-to-end service between two distant mobile terminals is based on an EPS bearer 41, between UE 100 and the P-GW 104, and an External Bearer 42, between P-GW 104 and the other mobile terminal UE 100.

The EPS bearer 41 is composed of a bearer E-RAB (for 'Evolved Radio Access Bearer') 43 between the UE 100 and the S GW 202, and of a bearer S5/S8 bearer 44, between the S-GW 202 and the P-GW 104.

More precisely, the E-RAB bearer 43 is composed of a Radio bearer 46 between the UE 100 and the home NodeB 101, and of a S1 bearer 45 between the home NodeB and the S-GW 202.

In one embodiment of the present invention, when a UE enters in the network, a default bearer is created. It is also possible to create some additional dedicated bearers at this step. A QoS value is associated to each created bearer. This QoS value can correspond to a QoS Class Identifier (or QCI) for instance. An Allocation and Retention Priority also (ARP) can be also associated to a bearer.

The following table described different QoS values which can be allocated to a bearer in one embodiment of the present invention.

| **QCI** | **Resource Type** | **Priority** | **Packet Delay Budget** **(NOTE 1)** | **Packet Error Loss Rate** **(NOTE 2)** | **Example Services** |
|---|---|---|---|---|---|
| 1 (NOTE 3) | GBR | 2 | 100 ms | 10⁻² | Conversational Voice |
| 2 (NOTE 3) | | 4 | 150 ms | 10⁻³ | Conversational Video (Live Streaming) |
| 3 (NOTE 3) | | 3 | 50 ms | 10⁻³ | Real Time Gaming |
| 4 (NOTE 3) | | 5 | 300 ms | 10⁻⁶ | Non-Conversational Video (Buffered Streaming) |
| 5 (NOTE 3) | Non-GBR | 1 | 100 ms | 10⁻⁶ | IMS Signalling |
| 6 (NOTE 4) | | 6 | 300 ms | 10⁻⁶ | Video (Buffered Streaming) TCP-based (e.g., www, e-mail, chat, ftp, p2p file sharing, progressive video, etc.) |
| 7 (NOTE 3) | | 7 | 100 ms | 10⁻³ | Voice, Video (Live Streaming) Interactive Gaming |
| 8 (NOTE 5) | | 8 | 300 ms | 10⁻⁶ | Video (Buffered Streaming) TCP-based (e.g., www, e-mail, chat, ftp, p2p file |
| 9 (NOTE 6) | | 9 | | | sharing, progressive video, etc.) |

Each QCI is associated to a Resource Type (GBR, for Guaranteed Bit Rate, or non-GBR), a Packet Delay Budget and a Packet Error Loss Rate. Optionally, ARP can be taken into account in case of resource limitation in order to accept or reject the creation of a new bearer, or to drop existing bearers when resource exhaustion occurs.

To each bearer, it is possible to associate a couple of Traffic Flow Template, one for uplink direction and another one for downlink direction. Such a couple of TFT allows mapping a voice or data traffic to a bearer. The uplink TFT can be applied by the UE and the downlink TFT can be applied by the PDN-GW. The couple of TFTs can be defined at the UE level.

In the illustrated architecture in one embodiment, the PDN-GW 104 is in charge of applying the policy of the core network (i.e. admission and control function) associated to corresponding bearers, while the home NodeB can be responsible of creating the Radio Bearer corresponding to a just created S1 Bearer, in correspondence to a just created S5/S8 Bearer. The home NodeB can then reserve radio resources according to the required QoS associated to the corresponding bearer.

In these conditions, on the downlink data plane, the home NodeB decapsulates packets from each S1 bearer and encapsulates them into the corresponding Radio Bearer. On the uplink data plane, the home NodeB decapsulates packets from each Radio Bearer and encapsulates them into the corresponding S1 bearer.

These steps can be performed at the home NodeB level, without checking the payload of handled packets. Consequently, it is possible to carry out a method for packet routing according to one embodiment of the present invention without manipulating payload packet.

More precisely, it is easy to introduce a packet routing at the level of the home NodeB between Radio Bearer and S1 bearer. Indeed, on uplink data plane, basis on a QoS value associated to the considered Radio Bearer, the home NodeB can decide to encapsulate the received packet into the corresponding S1 bearer or it can decide to transmit the received packet through the LAN interface. In this last case, some information is stored in memory to be able to handle the corresponding downlink. Moreover, some indications included in the packet are adapted before sending the packet through the LAN interface. This adaptation is done in order to make the home NodeB able to map an IP information with a given bearer. The terms 'IP information' covers an IP source address or a source port, notably.

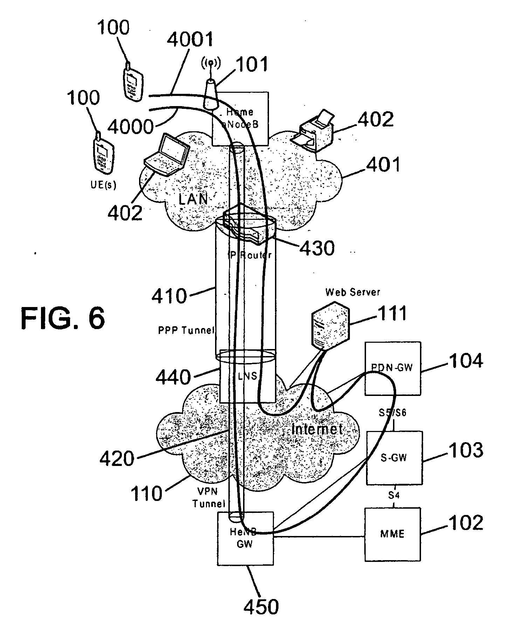

Figure 6 illustrates network architecture according to one embodiment of the present invention. The network, which is illustrated here, is an example of implementation of the present invention. Of course, it is easy to adapt the main principle to a lot of variants of networks.

The exemplary network illustrated in Figure 6 comprises a home NodeB 101, corresponding to a home radio network 106 not illustrated. It comprises also a Local Area Network LAN 401, wherein some different devices 402 are connected, like a PC or a printer... Mobile terminals 100 UE can be connected to the home NodeB 101.

In one embodiment, an access to an Internet network 110 is provided via a router 430 through a PPP tunnel (Point to Point Protocol) 410 towards an ISP LNS server 440.

The home NodeB 101 is connected to the Internet network 110 through a LAN interface via the router 430. There is no limitation regarding the LAN interface. It can be Ethernet, Wifi, etc...

A VPN (for 'Virtual Private Network') tunnel is opened between the home NodeB and a home NodeB GW (for Gateway), wherein S1-MME and S1-U interfaces can be encapsulated. In this embodiment, the home NodeB-GW is in charge of terminating the VPN tunnel and of routing IP packets to the MME 102 and S-GW 103 (and vice-versa). The VPN tunnel is transported inside the PPP tunnel.

However, no limitation is attached to this aspect regarding the present invention. For instance, a specific PPP connection may be used exclusively to transport packets intended for the mobile core network.

According to one embodiment of the present invention, it is possible to offer to an UE 100 an access to the Internet network 110 either via a first path 4000 through the core network interface, meaning via the core network of the mobile network, or via a second path 4001 through the LAN interface.

The first path 4000 goes from the UE 100 through the home NodeB 101, via the router 430 through the VPN tunnel 420, until the home NodeB GW 450. Then, the home NodeB GW is in charge of orienting received traffic towards the S-GW 103. After that, the traffic is oriented towards the Web Server 111 through PDN-GW 104.

Traffic from the UE, which is oriented to the Web server 111 through the second path 4001, goes through the LAN interface and through the PPP tunnel 410 until the ISP LNS server 440, which transfers the traffic to the Web server 111.

In order to route a packet according to one embodiment of the present invention, at first, it is required to select a path among the first and the second path, and secondly it is required to route packets over selected path.

In one embodiment of the present invention, for each packet coming from the UE, on the uplink, an output interface is selected at the home NodeB among the Core Network or the LAN interface. On the downlink, the home NodeB is able to perform a reverse operation by selecting a radio bearer to inject encapsulated packets coming from the LAN interface.

On uplink, the selection of an output interface between the LAN interface and the core network interface is done based on a QoS value associated to the bearer on which the packet is received. To route actually the received packet through the LAN interface, an IP information is allocated to this bearer only. Thus, on downlink, it is possible to determine the bearer to transmit the received packet to the correct UE. This IP information can be an IP source address or a source port. This IP information can be mapped on a given bearer.

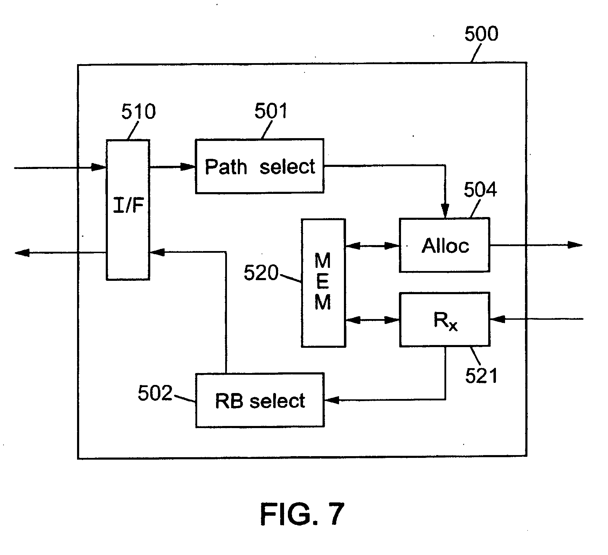

Figure 7 illustrates a routing module according to one embodiment of the present invention.

A routing module 500 is adapted to be included in a home NodeB in order to route packets from a terminal 100 of a mobile network to a device 402, 111 of an internet network 401, 110. It can comprise:
- an interface unit 510 adapted to receive from the terminal at least one IP packet on one bearer;
- an path selection unit 501 adapted to determine the QoS value associated to said bearer and to decide to route the packet through the core network interface or through the LAN interface, based on the associated QoS value.

The IP packet indicates a first IP source address. The routing module can further comprise:
- a memory 520;
- an allocating unit 504 adapted, if the path selection unit decide to route through the LAN interface, to allocate a second IP source address to the bearer and to store in said memory the first and the second IP source addresses and said bearer as an associated bearer.

The allocating unit can allocate different second IP source addresses respectively to different bearers on a one-to-one basis. In this case, it is possible to map directly a second IP address to a bearer. Then, on downlink reception, the routing module can select a bearer for a received IP packet, based on its IP destination address which will correspond to the second IP source address on uplink, as stored in memory in association the bearer.

The routing module 500 can further comprise:
- a receiving unit 521 adapted to receive from the LAN interface an IP packet indicating an IP destination port and an IP destination address; and
- a bearer selection unit 502 adapted to consider said IP destination address as a second IP source address and to retrieve the associated bearer stored in memory 520;
wherein the interface unit 510 is then in charge of routing said IP packet through said associated bearer.

The IP packet indicates an original source port. The allocating unit 504 can be adapted to allocate:
- a same second IP address to a plurality of different bearers;
- different alternate source ports respectively to different bearers on a one-to-one basis ; and
to store an association of the first and the second IP source addresses, the original source port, the alternate source port, the destination IP address, the destination port and the bearer as an associated bearer.

The routing module 500 can further comprise:
- a receiving unit 521 adapted to receive from the LAN interface an IP packet indicating an IP destination port and an IP destination address; and
- a bearer selection unit 502 adapted to consider said IP destination port as an alternate source port and to retrieve the associated bearer stored in memory 520;
wherein the interface unit 510 is then in charge of routing said IP packet through said associated bearer.

In one embodiment, the QoS values associated to the different bearers correspond to the values described in a standard (like TS 23.203 3GPP Technical Specification Group Services and System Aspects Policy and charging Control Architecture) as QCI values (for 'Quality Class Identifier'). A preferred path is also associated to each QCI values as described in the following table for instance.

| QCI | Resource Type | Services | Path |
|---|---|---|---|
| 1 | GBR | Voice (phone) | Mobile core network |
| 2 | GBR | Video conference | Mobile core network |
| 3 | GBR | Real time gaming | Mobile core network |
| 4 | GBR | Video streaming (non live, RTP) | Mobile core network |
| 5 | Non-GBR | IMS signalling | Mobile core network |
| 6 | Non-GBR | Video streaming (non live, TCP) | ISP |
| 7 | Non-GBR | VoIP, interactive gaming | ISP |
| 8 | Non-GBR | TCP applications (premium) | Mobile core network |
| 9 | Non-GBR | TCP applications (best effort) | ISP |

There is no limitation attached to the present invention regarding the QoS values and their mapping to the type of path, or type of interface, to be selected.

This mapping can be determined taking into account a lot of different parameters in different ways. The different parameters can be, for instance, the type of subscriptions for the considered UE, a level of quality associated to the both path (Core Network and LAN), etc ...

This mapping table can be statically configured by the mobile operator. In addition, some dynamic rules can be defined in order to change the path based on a comparison of quality levels for a packet transmissions through the Mobile core network or the ISP paths.

In one embodiment, if the core network allows transmitting packets with a better QoS than the LAN interface, it could be relevant in some conditions to route towards the core network packets received from a UE associated to an expensive mobile subscription and to route towards the LAN interface packets received from a UE associated to a cheap subscription.

An exception can be done for the default bearer whose data may always be routed to the mobile core network. A routing based on QoS value can be defined implicitly or by configuring the home NodeB. The mobile operator (or the customer) may decide to modify the routing rules according to the applications running on the UEs, and/or to the quality of the Internet access, for instance.

In order to be able to route packets across the router 430 and to be able to make UEs able to communicate with other LAN devices, IP addresses belonging to the LAN address class (public or private) are allocated. For that purpose, in one embodiment, a network address translation (NAT) is implemented at the home NodeB for packets destined to and coming from the LAN interface.

In this condition, the LAN interface can be accessed in a transparent way for the UE.

In the first variant, for each radio bearer identified by its RB-ID, to be routed through the LAN interface, a particular LAN IP address IP_{RB-ID,LAN} is allocated with any method (authorized static range, DHCPrequest) in order to be associated to one radio bearer only.

Each packet conveyed by the considered radio bearer RB-ID is associated to an IP address, noted IPRB-ID,cN.

At the level of the allocating unit 504, the original UE IP address IP_{RB-ID,CN,} which is a first IP address, is replaced by the LAN IP address IP_{RB-ID,LAN,} which is a second IP address. In this case, TCP/UDP ports can be kept unchanged.

In one embodiment, the allocating unit 504 handles a NAT table associating IP_{RB-ID,CN} and IP_{RB-ID,LAN} and RB-ID. This NAT table is updated each time a new radio bearer is created or deleted. IP_{RB-ID,CN} is got from the first data packet transmitted by the UE on the radio bearer. IP_{RB-ID,LAN}. is allocated upon radio bearer creation.

In the reverse direction, packets destined to a given RB-ID are associated to an IP address IP_{RB-ID,LAN} as destination address. So, the Rx unit 52 replaces the IP_{RB-ID,LAN} address by the corresponding IP_{RB-ID,CN} based on the NAT table.

This method is simple, and data ports are kept unchanged during the routing process. This method can be almost transparent for any application. Indeed, the incoming traffic with a given IP destination address is conveyed in the same radio bearer. It is an advantage notably for applications that are simultaneously client and server and that use multiple TCP connections (FTP client, SIP Phone, P2P...).

In the second variant, the home NodeB can allocate less LAN IP addresses than the number of radio bearers to be routed to the LAN. In this second variant, it is planed to use other IP information in order to allow a mapping between bearer and said IP information. For instance, it is possible to handle a pool of available source ports at the home NodeB. Then, different bearers can be mapped on destination UDP/TCP ports of outgoing packets. No limitation is attached to this available port allocation. Original source port can be kept the same, or can be translated to an alternate new one depending on the context. Different methods can be applied to determine a new destination port, the objective being to allocated an IP address and a given source port to one bearer only.

In the reverse direction, on downlink, destination ports are translated to the original value while the destination IP address is replaced by the corresponding IP_{RB-ID,CN.}

This second variant can be based on a translation table wherein a given transport protocol (TCP or UDP) is associated to the IP_{RB-ID,CN,} the destination IP address, the original source TCP/UDP port and the new TCP/UDP source port. A new entry is inserted in the translation table when a new TCP connection or UDP flow is opened by the UE. Entries can be removed upon TCP connection closing or upon UDP "no-traffic timer" expiration. A lookup is performed in this translation table each time a packet is forwarded. For incoming packets, if the lookup fails then packets are preferably discarded in order to prevent unsafe traffic to be forwarded on the radio link. A third variant can correspond to any combination of the first and the second variants.

In an advantageous embodiment, one common IP address is allocated for all bearers of a single UE. Bearers can be then distinguished based on UDP/TCP ports.

A Downlink Radio Bearer Selection (DRBS) table can be handled for routing received packet on downlink.

For that purpose, it is planned to monitor each outgoing TCP connection or UDP flow identified by the following quintuplet:
- Transport Protocol Type,
- Source IP address,
- Source UDP/TCP port,
- Destination IP address,
- Destination port.

Then, each quintuplet can be associated with a corresponding Radio Bearer ID (RB-ID).

The following section details an exemplary treatment applied on received packets on downlink according to one embodiment of the present invention. Two UEs have the following respective IP addresses in the Core network IP_{RB-ID, CN:}
- 10.226.206.218
- 10.226.206.219

At this step, the following tables are available (because they have been built previously upon packets transmission on uplink):
- the DBRS table:

| IP_source@ | source port (TCP/UDP) | IP_Dest@ | destination port (TCP/UDP) | RB_ID |
|---|---|---|---|---|
| 10.226.206.218 | 20453 | 81.10.152.12 | 80 | 2 |
| 10.226.206.218 | 19452 | 194.25.266.12 | 1080 | 1 |
| 10.226.206.219 | 19452 | 81.10.152.12 | 80 | 3 |

- the Nat table 1 according to the first variant:

| IP_{RB_ID, CN} | IP_{RB_ID, LAN} | RB_ID |
|---|---|---|
| 10.226.206.218 | 192.168.0.10 | 2 |
| 10.226.206.218 | 192.168.0.11 | 1 |
| 10.226.206.219 | 192.168.0.12 | 2 |

- the NAT table 2 according to the second variant:

| IP_{RB_ID, CN} | Original source port (TCP/UDP) | Alternate source port (TCP/UDP) | IP_Dest@ | destination port (TCP/UDP) |
|---|---|---|---|---|
| 10.226.206.218 | 20453 | 20453 | 81.10.152.12 | 80 |
| 10.226.206.218 | 19452 | 19452 | 194.25.266.2 | 1080 |
| 10.226.206.219 | 19452 | 20454 | 81.10.152.12 | 80 |

Thus, when a packet is received from the LAN interface, it indicates an IP_{RB_ID, LAN} address as a destination IP address and a destination port.

In the first variant, using the NAT table 1, the bearer identifier is determined based on the IP_{RB_ID, LAN} indicated in the packet.

In the second variant, using the NAT table 2, the bearer identifier is determined based on the destination port indicated in the packet.

## Claims

1. Method for routing packets from a terminal (100) of a mobile network to a device (402, 111) of an internet network (401, 110),
the mobile network having a core network (105) and a home network (106) including a home NodeB (101);
said internet network being linked to the home network either through a core network interface or through a LAN interface;
packets being transmitted in the mobile network through respective bearers, a QoS value being associated to each bearer;
said method comprising the following steps at the home NodeB:
/1/ receiving from the terminal at least one IP packet on one bearer;
/2/ determining the QoS value associated to said bearer;
/3/ deciding to route the packet through the core network interface or through the LAN interface, based on the associated QoS value;
wherein the QoS value is mapped either to the core network interface or to the LAN interface/statically by using an internal mapping table, **characterised in that** the home NodeB sets a VLAN tag based on the QoS associated to the bearer and according to the internal mapping table.

2. Method for routing packets according to claim 1, wherein the IP packet indicates a first IP source address;
said method further comprising the following steps, in case of routing the IP packet through the LAN interface:
/a/ allocating a second IP source address to the bearer;
/b/ storing in memory the first and the second IP source addresses and said bearer as an associated bearer.

3. Method for routing packets according to claim 2, wherein, at step /a/, different second IP source addresses are respectively allocated to different bearers on a one-to-one basis.

4. Method for routing packets according to claim 3, further comprising the following steps at the home NodeB:
/i/ receiving from the LAN interface an IP packet indicating an IP destination port and an IP destination address;
/ii/ considering said IP destination address as a second IP source address and retrieving the associated bearer stored in memory;
/iii/ replacing said IP destination address by the first IP source address associated to the bearer; and
/iv/ routing the packet through the associated bearer.

5. Method for routing packets according to claim 2, wherein, the IP packet indicating an original source port,
at step /a/, the following steps are performed:
- allocating a same second IP source address to a plurality of different bearers;
- allocating different alternate source ports respectively to different bearers on a one-to-one basis ;
- storing an association of the first and the second IP source addresses, the original source port, the alternate source port, the destination IP address, the destination port and the bearer as an associated bearer.

6. Method for routing packets according to claim 5 further comprising the following steps at the home NodeB:
/i/ receiving from the LAN interface an IP packet indicating an IP destination port and an IP destination address;
/ii/ considering said IP destination port as an alternate source port and retrieving the associated bearer stored in memory;
/iii/ replacing said IP destination port with the original source port, and said IP destination address by the first IP source address associated to the bearer; and
/iv/ routing the packet through the associated bearer.

7. Method of routing packets according to any one of the preceding claims, wherein the QoS value corresponds to a Quality Class Indicator.

8. A Home NodeB comprising a routing module (500) configured to route packets from a terminal (100) of a mobile network to a device (402, 111) of an internet network (401, 110),
the mobile network having a core network (105) and a home network (106) including said home NodeB (101);
said internet network being linked to the home network either through a core network interface or through a LAN interface;
packets being transmitted in the mobile network through respective bearers, a QoS value being associated to each bearer;
said routing module comprising:
- an interface unit (510) adapted to receive from the terminal at least one IP packet on one bearer;
- an path selection unit (501) adapted to determine the QoS value associated to said bearer and to decide to route the packet through the core network interface or through the LAN interface, based on the associated QoS value;
wherein the QoS value is mapped either to the core network interface or to the LAN interface statically by using an internal mapping table, **characterised in that** the home NodeB is further configured to set a VLAN tag based on the QoS associated to the bearer and according to the internal mapping table.

9. Home NodeB according to claim 8, the IP packet indicating a first IP source address,
said routing module further comprising :
- a memory (520);
- an allocating unit (504) adapted, if the path selection unit decides to route through the LAN interface, to allocate a second IP source address to the bearer and to store in said memory the first and the second IP source addresses and said bearer as an associated bearer.

10. Home NodeB according to claim 9, wherein the allocating unit allocates different second IP source addresses respectively to different bearers on a one-to-one basis.

11. Home NodeB according to claim 10, the routing module (500) further comprising:
- a receiving unit (521) adapted to receive from the LAN interface an IP packet indicating an IP destination port and an IP destination address; and
- a bearer selection unit adapted to consider said IP destination address as a second IP source address and to retrieve the associated bearer stored in memory (520);
wherein the interface unit (510) is in charge of routing said IP packet through said associated bearer.

12. Home NodeB according to claim 10, wherein, the IP packet indicating an original source port, the allocating unit (504) is adapted to allocate
- a same second IP address to a plurality of different bearers;
- different alternate source ports respectively to different bearers on a one-to-one basis ; and
to store an association of the first and the second IP source addresses, the original source port, the alternate source port, the destination IP address, the destination port and the bearer, as an associated bearer.

13. Home NodeB according to claim 9, the routing module (500) further comprising:
- a receiving unit (521) adapted to receive from the LAN interface an IP packet indicating an IP destination port and an IP destination address; and
- a bearer selection unit adapted to consider said IP destination port as an alternate source port and to retrieve the associated bearer stored in memory (520);
wherein the interface unit (510) is in charge of routing said IP packet through said associated bearer.

## Patentansprüche

1. Verfahren zum Leiten von Paketen von einem Endgerät (100) eines Mobilnetzes zu einem Gerät (402, 111) eines Internet-Netzes (401, 110),
wobei das Mobilnetz ein Kernnetz (105) und ein Home-Netz (106) einschließlich einer Home-NodeB (101) aufweist,
wobei besagtes Internet-Netz entweder über eine Kernnetz-Schnittstelle oder über eine LAN-Schnittstelle mit dem Home-Netz verbunden wird,
wobei in dem Mobilnetz Pakete durch jeweilige Bearer übertragen werden und jedem Bearer ein QoS-Wert zugeordnet wird,
wobei besagtes Verfahren die folgenden Schritte an der Home-NodeB umfasst:
/1/ Empfangen mindestens eines IP-Paketes von dem Endgerät auf einem Bearer,
/2/ Bestimmen des besagtem Bearer zugeordneten QoS-Wertes,
/3/ Entscheiden, das Paket über die Kernnetz-Schnittstelle oder über die LAN-Schnittstelle zu leiten, auf der Grundlage des zugeordneten QoS-Wertes,
wobei der QoS-Wert statisch unter Verwendung einer internen Mapping-Tabelle entweder der Kernnetz-Schnittstelle oder der LAN-Schnittstelle zugeordnet wird, **dadurch gekennzeichnet, dass** die Home-NodeB auf der Grundlage der dem Bearer zugeordneten Dienstgüte und gemäß der internen Mapping-Tabelle ein VLAN-Tag setzt.

2. Verfahren zum Leiten von Paketen nach Anspruch 1, wobei das IP-Paket eine erste IP-Quelladresse angibt,
wobei besagtes Verfahren im Falle des Leitens des IP-Paketes über die LAN-Schnittstelle ferner die folgenden Schritte umfasst:
/a/ Vergeben einer zweiten IP-Quelladresse an den Bearer,
/b/ Ablegen der ersten IP-Quelladresse und der zweiten IP-Quelladresse und besagten Bearers als zugeordneten Bearer in einem Speicher.

3. Verfahren zum Leiten von Paketen nach Anspruch 2, wobei in Schritt /a/ unterschiedliche zweite IP-Quelladressen jeweils an unterschiedliche Bearer eineindeutig vergeben werden.

4. Verfahren zum Leiten von Paketen nach Anspruch 3, ferner umfassend die folgenden Schritte an der Home-NodeB:
/i/ Empfangen eines IP-Paketes, das einen IP-Zielport und eine IP-Zieladresse angibt, von der LAN-Schnittstelle,
/ii/ Berücksichtigen besagter IP-Zieladresse als zweite IP-Quelladresse und Abrufen des in dem Speicher abgelegten zugeordneten Bearers,
/iii/ Ersetzen besagter IP-Zieladresse durch die erste IP-Quelladresse, die dem Bearer zugeordnet ist, und
/iv/ Leiten des Paketes über den zugeordneten Bearer.

5. Verfahren zum Leiten von Paketen nach Anspruch 2, wobei, falls das IP-Paket einen Originalquellport angibt,
in Schritt /a/ die folgenden Schritte ausgeführt werden:
- Vergeben einer gleichen zweiten IP-Quelladresse an eine Mehrzahl von unterschiedlichen Bearern,
- jeweils eineindeutiges Vergeben von unterschiedlichen alternativen Quellports an unterschiedliche Bearer,
- Speichern einer Verknüpfung der ersten IP-Quelladresse und der zweiten IP-Quelladresse, des Originalquellports, des alternativen Quellports, der IP-Zieladresse, des Zielports und des Bearers als zugeordneten Bearer.

6. Verfahren zum Leiten von Paketen nach Anspruch 5, ferner umfassend die folgenden Schritte an der Home-NodeB:
/i/ Empfangen eines IP-Paketes, das einen IP-Zielport und eine IP-Zieladresse angibt, von der LAN-Schnittstelle,
/ii/ Berücksichtigen besagten IP-Zielports als alternativen Quellport und Abrufen des in dem Speicher abgelegten zugeordneten Bearers,
/iii/ Ersetzen besagten IP-Zielports durch den Originalquellport und besagter IP-Zieladresse durch die erste IP-Quelladresse, die dem Bearer zugeordnet ist, und
/iv/ Leiten des Paketes über den zugeordneten Bearer.

7. Verfahren zum Leiten von Paketen nach einem der vorangehenden Ansprüche, wobei der QoS-Wert einem Güteklassenindikator entspricht.

8. Eine Home-NodeB, umfassend ein Routing-Modul (500), das so konfiguriert ist, dass es Pakete von einem Endgerät (100) eines Mobilnetzes zu einem Gerät (402, 111) eines Internet-Netzes (401, 110) leitet,
wobei das Mobilnetz ein Kernnetz (105) und ein Home-Netz (106) einschließlich besagter Home-NodeB (101) aufweist,
wobei besagtes Internet-Netz entweder über eine Kernnetz-Schnittstelle oder über eine LAN-Schnittstelle mit dem Home-Netz verbunden ist,
wobei in dem Mobilnetz Pakete durch jeweilige Bearer übertragen werden und jedem Bearer ein QoS-Wert zugeordnet ist,
wobei besagtes Routing-Modul umfasst:
- eine Schnittstelleneinheit (510), die so angepasst ist, dass sie von dem Endgerät mindestens ein IP-Paket auf einem Bearer empfängt,
- eine Wegewahleinheit (501), die so angepasst ist, dass sie den besagtem Bearer zugeordneten QoS-Wert bestimmt und auf der Grundlage des zugeordneten QoS-Wertes entscheidet, das Paket über die Kernnetz-Schnittstelle oder über die LAN-Schnittstelle zu leiten,
wobei der QoS-Wert statisch unter Verwendung einer internen Mapping-Tabelle entweder der Kernnetz-Schnittstelle oder der LAN-Schnittstelle zugeordnet wird, **dadurch gekennzeichnet, dass** die Home-NodeB ferner so konfiguriert ist, dass sie auf der Grundlage der dem Bearer zugeordneten Dienstgüte und gemäß der internen Mapping-Tabelle ein VLAN-Tag setzt.

9. Home-NodeB nach Anspruch 8, wobei das IP-Paket eine erste IP-Quelladresse angibt,
wobei besagtes Routing-Modul ferner umfasst:
- einen Speicher (520),
- eine Vergabeeinheit (504), die so angepasst ist, dass sie, falls die Wegewahleinheit entscheidet, über die LAN-Schnittstelle zu leiten, eine zweite IP-Quelladresse an den Bearer vergibt und die erste IP-Quelladresse und die zweite IP-Quelladresse und besagten Bearer als zugeordneten Bearer in besagtem Speicher ablegt.

10. Home-NodeB nach Anspruch 9, wobei die Vergabeeinheit unterschiedliche zweite IP-Quelladressen jeweils an unterschiedliche Bearer eineindeutig vergibt.

11. Home-NodeB nach Anspruch 10, wobei das Routing-Modul (500) ferner umfasst:
- eine Empfangseinheit (521), die so angepasst ist, dass sie von der LAN-Schnittstelle ein IP-Paket, das einen IP-Zielport und eine IP-Zieladresse angibt, empfängt, und
- eine Bearerwahleinheit, die so angepasst ist, dass sie besagte IP-Zieladresse als zweite IP-Quelladresse berücksichtigt und den in dem Speicher (520) abgelegten zugeordneten Bearer abruft,
wobei die Schnittstelleneinheit (510) für das Leiten besagten IP-Paketes über besagten zugeordneten Bearer zuständig ist.

12. Home-NodeB nach Anspruch 10, wobei, falls das IP-Paket einen Originalquellport angibt, die Vergabeeinheit (504) so angepasst ist, dass sie:
- eine gleiche zweite IP-Adresse an eine Mehrzahl von unterschiedlichen Bearern vergibt,
- unterschiedliche alternative Quellports jeweils an unterschiedliche Bearer eineindeutig vergibt und
eine Verknüpfung der ersten IP-Quelladresse und der zweiten IP-Quelladresse, des Originalquellports, des alternativen Quellports, der IP-Zieladresse, des Zielports und des Bearers als zugeordneten Bearer speichert.

13. Home-NodeB nach Anspruch 9, wobei das Routing-Modul (500) ferner umfasst:
- eine Empfangseinheit (521), die so angepasst ist, dass sie von der LAN-Schnittstelle ein IP-Paket, das einen IP-Zielport und eine IP-Zieladresse angibt, empfängt, und
- eine Bearerwahleinheit, die so angepasst ist, dass sie besagten IP-Zielport als alternativen Quellport berücksichtigt und den in dem Speicher (520) abgelegten zugeordneten Bearer abruft,
wobei die Schnittstelleneinheit (510) für das Leiten besagten IP-Paketes über besagten zugeordneten Bearer zuständig ist.

## Revendications

1. Procédé d'acheminement de paquets à partir d'un terminal (100) d'un réseau mobile jusqu'à un dispositif (402, 111) d'un réseau Internet (401, 110),
le réseau mobile ayant un réseau central(105) et un réseau domestique (106) comprenant un NodeB domestique (101) ;
ledit réseau Internet étant lié au réseau domestique par l'intermédiaire d'une interface de réseau central ou d'une interface LAN ;
des paquets étant transmis dans le réseau mobile par l'intermédiaire de porteuses respectives, une valeur de qualité de service, QoS, étant associée à chaque porteuse ; ledit procédé comprenant les étapes suivantes au niveau du NodeB domestique :
/1/ la réception, en provenance du terminal, d'au moins un paquet IP sur une porteuse ;
/2/ la détermination de la valeur de QoS associée à ladite porteuse ;
/3/ la décision d'acheminer le paquet par l'intermédiaire de l'interface de réseau central ou par l'intermédiaire de l'interface LAN, sur la base de la valeur de QoS associée ;
dans lequel la valeur de QoS est mappée sur l'interface de réseau central ou sur l'interface LAN de manière statique en utilisant une table de mappage interne, **caractérisé en ce que** le NodeB domestique règle une étiquette VLAN sur la base de la QoS associée à la porteuse et en fonction de la table de mappage interne.

2. Procédé d'acheminement de paquets selon la revendication 1, dans lequel le paquet IP indique une première adresse IP source ;
ledit procédé comprenant en outre les étapes suivantes, dans le cas où le paquet IP est acheminé par l'intermédiaire de l'interface LAN :
/a/ l'affectation d'une deuxième adresse IP source à la porteuse ;
/b/ la mémorisation en mémoire des première et deuxième adresses IP sources et de ladite porteuse en tant que porteuse associée.

3. Procédé d'acheminement de paquets selon la revendication 2, dans lequel, à l'étape /a/, des deuxièmes adresses IP sources différentes sont respectivement affectées à différentes porteuses à raison d'une adresse par porteuse.

4. Procédé d'acheminement de paquets selon la revendication 3, comprenant en outre les étapes suivantes au niveau du noeud B domestique :
/i/ la réception, en provenance de l'interface LAN, d'un paquet IP indiquant un port de destination IP et une adresse IP de destination ;
/ii/ la prise en compte de ladite adresse IP de destination en tant que deuxième adresse IP source et l'extraction de la porteuse associée mise en mémoire ;
/iii/ le remplacement de ladite adresse IP de destination par la première adresse IP source associée à la porteuse ; et
/iv/ l'acheminement du paquet par l'intermédiaire de la porteuse associée.

5. Procédé d'acheminement de paquets selon la revendication 2, dans lequel le paquet IP indique un port source d'origine,
à l'étape /a/, les étapes suivantes sont effectuées :
- l'affectation d'une même deuxième adresse IP source à une pluralité de porteuses différentes ;
- l'affectation de différents ports de source alternatifs respectivement à différentes porteuses à raison d'un port par porteuse ;
- la mémorisation d'une association des première et deuxième adresses IP sources, du port source d'origine, du port source alternatif, de l'adresse IP de destination, du port de destination et de la porteuse en tant que porteuse associée.

6. Procédé d'acheminement de paquets selon la revendication 5, comprenant en outre les étapes suivantes au niveau du noeud B domestique :
/i/ la réception, en provenance de l'interface LAN, d'un paquet IP indiquant un port de destination IP et une adresse IP de destination ;
/ii/ la prise en compte dudit port de destination IP en tant que port source alternatif et l'extraction de la porteuse associée mise en mémoire ;
/iii/ le remplacement dudit port de destination IP par le port source d'origine, et de ladite adresse IP de destination par la première adresse IP source associée à la porteuse ; et
/iv/ l'acheminement du paquet par l'intermédiaire de la porteuse associée.

7. Procédé d'acheminement de paquets selon l'une quelconque des revendications précédentes, dans lequel la valeur de QoS correspond à un indicateur de classe de qualité.

8. NodeB domestique comprenant un module d'acheminement (500) configuré pour acheminer des paquets à partir d'un terminal (100) d'un réseau mobile jusqu'à un dispositif (402, 111) d'un réseau Internet (401, 110),
le réseau mobile ayant un réseau central (105) et un réseau domestique (106) comprenant ledit noeud B domestique (101) ;
ledit réseau Internet étant lié au réseau domestique par l'intermédiaire d'une interface de réseau central ou d'une interface LAN ;
des paquets étant transmis dans le réseau mobile par l'intermédiaire de porteuses respectives, une valeur de qualité de service, QoS, étant associée à chaque porteuse ; ledit module d'acheminement comprenant :
- une unité d'interface (510) apte à recevoir, en provenance du terminal, au moins un paquet IP sur une porteuse ;
- une unité de sélection de voie (501) apte à déterminer la valeur de QoS associée à ladite porteuse et à décider d'acheminer le paquet par l'intermédiaire de l'interface de réseau central ou par l'intermédiaire de l'interface LAN sur la base de la valeur de QoS associée ;
dans lequel la valeur de QoS est mappée sur l'interface de réseau central ou sur l'interface LAN de manière statique en utilisant une table de mappage interne, **caractérisé en ce que** le NodeB domestique est en outre configuré pour régler une étiquette VLAN sur la base de la QoS associée à la porteuse et en fonction de la table de mappage interne.

9. Noeud B domestique selon la revendication 8, dans lequel le paquet IP indique une première adresse IP source,
ledit module d'acheminement comprenant en outre :
- une mémoire (520) ;
- une unité d'affectation (504) apte à, si l'unité de sélection de voie décide d'effectuer l'acheminement par l'intermédiaire de l'interface LAN, affecter une deuxième adresse IP source à la porteuse et mémoriser dans ladite mémoire les première et deuxième adresses IP sources et ladite porteuse en tant que porteuse associée.

10. NodeB domestique selon la revendication 9, dans lequel l'unité d'affectation affecte des deuxièmes adresses IP sources différentes respectivement à différentes porteuses à raison d'une adresse par porteuse.

11. domestique selon la revendication 10, le module d'acheminement (500) comprenant en outre :
- une unité de réception (521) apte à recevoir, en provenance de l'interface LAN, un paquet IP indiquant un port de destination IP et une adresse IP de destination ; et
- une unité de sélection de porteuse apte à prendre en compte ladite adresse IP de destination en tant que deuxième adresse IP source et à extraire la porteuse associée mise en mémoire (520) ;
dans lequel l'unité d'interface (510) est chargée de l'acheminement dudit paquet IP par l'intermédiaire de ladite porteuse associée.

12. NodeB domestique selon la revendication 10, dans lequel le paquet IP indique un port source d'origine, l'unité d'affectation (504) est apte à affecter :
- une même deuxième adresse IP à une pluralité de porteuses différentes ;
- différents ports sources alternatifs respectivement à différentes porteuses à raison d'un port par porteuse ; et
l'unité d'affectation (504) est apte à mémoriser une association des première et deuxième adresses IP sources, du port source d'origine, du port source alternatif, de l'adresse IP de destination, du port de destination et de la porteuse en tant que porteuse associée.

13. NodeB domestique selon la revendication 9, le module d'acheminement (500) comprenant en outre :
- une unité de réception (521) apte à recevoir, en provenance de l'interface LAN, un paquet IP indiquant un port de destination IP et une adresse IP de destination ; et
- une unité de sélection de porteuse apte à prendre en compte ledit port de destination IP en tant que port source alternatif et à extraire la porteuse associée mise en mémoire (520) ;
dans lequel l'unité d'interface (510) est chargée de l'acheminement dudit paquet IP par l'intermédiaire de ladite porteuse associée.
